# EUROPEAN PATENT APPLICATION

(11) **EP 4 729 221 A2**
(43) Date of publication of application: **22.04.2026**
(21) Application number: 25208751.5
(22) Date of filing: 15.10.2025
(51) Int. Cl.: B23D 77/00

(54) **ROTARY BORING TOOL**

(30) Priority: 16.10.2024 US 202418917017
(71) Applicant: Kennametal Inc., Latrobe, PA 15650-0231 (US)
(72) Inventor: BOOKHEIMER, Alan, Latrobe 15650-0231 (US); MUSIL, John, Latrobe 15650-0231 (US); SCHMID, Dominik, Latrobe 15650-0231 (US); SEMNISKY, Logan, Latrobe 15650-0231 (US)
(74) Representative: FDST Patentanwälte

(57) **Abstract**

A rotary cutting tool (100) includes a support body (110), a plurality of 3D printed support arm assemblies (200) removably fastened to the support body, and a 3D printed coolant manifold (500). Each support arm assembly (200) includes a base (201) removably attached to an exterior of the support body (110), and a plurality of support arms (202) extending from the base, with at least one of the arms defining a pocket (101) adapted to receive a cutting insert (402). The coolant manifold (500) includes a central opening adapted to be removably connected to a supply of coolant, and a plurality of supply legs (504) in communication with the central opening and operatively connected to one of the support arms of each support arm assembly (200) for supplying coolant to each of the pockets (210).

## Description

### FIELD OF THE INVENTION

The present disclosure relates to cutting tools, and more particularly, a lightweight rotary cutting tool, such as a rotating boring tool, and the like, comprising a support structure having a plurality of support members manufactured using additive manufacturing.

### BACKGROUND

During a cutting operation, it is essential to prevent unwanted movement of the cutting tool. It has been observed that a rotary cutting tool, for example, a reamer, a slotting cutter, and the like, may not have the desired stiffness to prevent unwanted movement during a cutting operation. In addition, certain applications require lightweight tooling solutions based on machine and application limits. Certain structures and designs can be used to retain stiffness, while reducing weight.

In many machining applications, the weight of the cutting tool can become a significant constraint. For example, heavy tools are problematic for operators who must handle the tools. In addition, the time to accelerate and decelerate the tool to its desired speed decreases with reduced tool weight and moment of inertia. Further, large and/or heavy tools become difficult or impractical to move by hand, thereby requiring the use of automatic tool changers. Even further, heavy cutting tools can exceed machine weight limitations, cause issues with tool change efficiency or even result in poor machining quality if the tilting moment of the tool is too high for the machine connection. This is a common issue when machining large parts such as EV motor housings, transmission housing, and other transportation components on machining centers.

Thus, there is a need to minimize the weight of heavy conventional cutting tools, while retaining adequate stiffness, to allow for easier handling and reduced operating costs.

### SUMMARY

According to an embodiment of the present disclosure, a rotary cutting tool includes a support body, a plurality of 3D printed support arm assemblies or elements removably fastened to the support body, and a 3D printed coolant manifold. Each support arm assembly includes a base removably attached to an exterior of the support body, and a plurality of support arms extending from the base. At least one of the arms defines a pocket adapted to receive a cutting insert. The coolant manifold includes a central opening adapted to be removably connected to a supply of coolant, and a plurality of supply legs in communication with the central opening and operatively connected to one of the support arms of each support arm assembly for supplying coolant to each of the pockets.

### BRIEF DESCRIPTION OF THE DRAWINGS

The invention will now be described by way of example with reference to the accompanying Figures, of which:
Figure 1 is a side perspective view of a cutting tool according to an embodiment of the present disclosure;
Figure 2 is a side cross-sectional view of the tool of the present disclosure;
Figure 3 is a first side view of the tool of the present disclosure with an arbor or machine adapter removed therefrom;
Figure 4 is a second side view of the tool of the present disclosure with an arbor or machine adapter removed therefrom;
Figure 5 is a first perspective view of a first cutter support of the tool of the present disclosure;
Figure 6 is a second perspective view of the first cutter support of the tool of the present disclosure;
Figure 7 is a third perspective view of the first cutter support of the tool of the present disclosure;
Figure 8 is a first perspective view of a second cutter support of the tool of the present disclosure;
Figure 9 is a second perspective view of the second cutter support of the tool of the present disclosure;
Figure 10 is a third perspective view of the second cutter support of the tool of the present disclosure;
Figure 11 is a front view of a cutting insert installed into a pocket of the second cutter support;
Figure 12 is a close up, perspective view a manifold attachment assemble utilized in the tool described herein.
Figure 13 is a top view of the manifold utilized by the tool of the present disclosure; and
Figure 14 is a side view of the manifold of Figure 13.

### DETAILED DESCRIPTION OF THE EMBODIMENTS

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

As used herein, the term "3D printing" is any of various processes in which material is joined or solidified under computer control to create a three-dimensional object, with material being added together, such as liquid molecules or powder grains being fused together, typically layer by layer. In the past, 3D printing techniques were considered suitable only to the production of functional or aesthetical prototypes and, back then, a more comprehensive term for 3D printing was rapid prototyping. Today, the precision, repeatability and material range have increased to the point that 3D printing is considered as an industrial production technology, with the official term of "additive manufacturing".

Embodiments of the present disclosure utilize modular 3D printed support arms that bolt to a central tube or base structure and support a cartridge pocket, resulting in a tool with an improved stiffness to weight ratio. The support arms have a varying elliptical cross section as they extend from the tube to the cartridge pocket. Rear support arms sweep along a helical path, while front and middle support arms extend along a linear path. The arms are arranged to improve support of the cartridge against the cutting forces and form truss like structure. The support arms are supplied with coolant via a 3D printed coolant manifold that connects as a separate component.

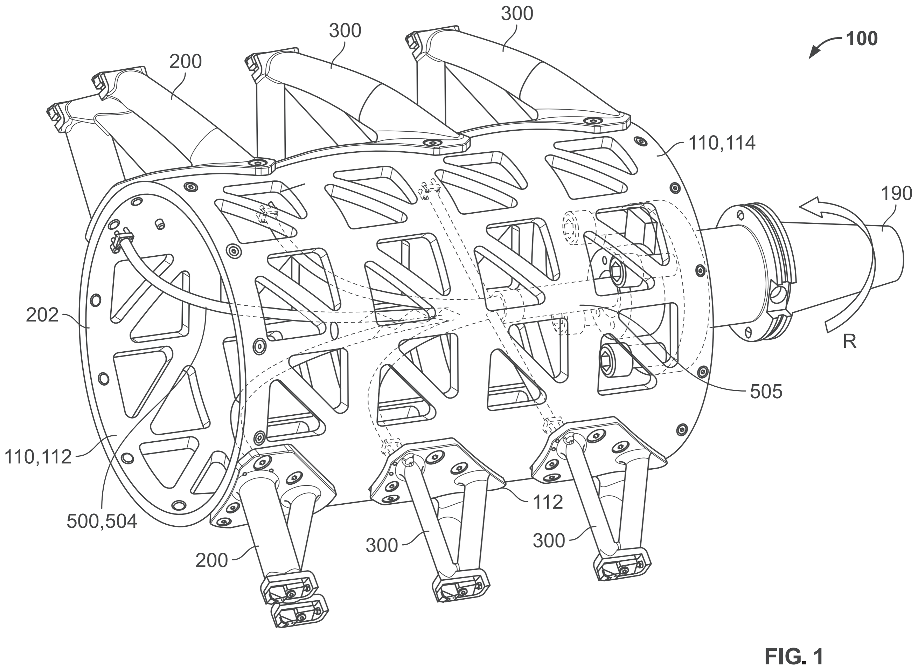

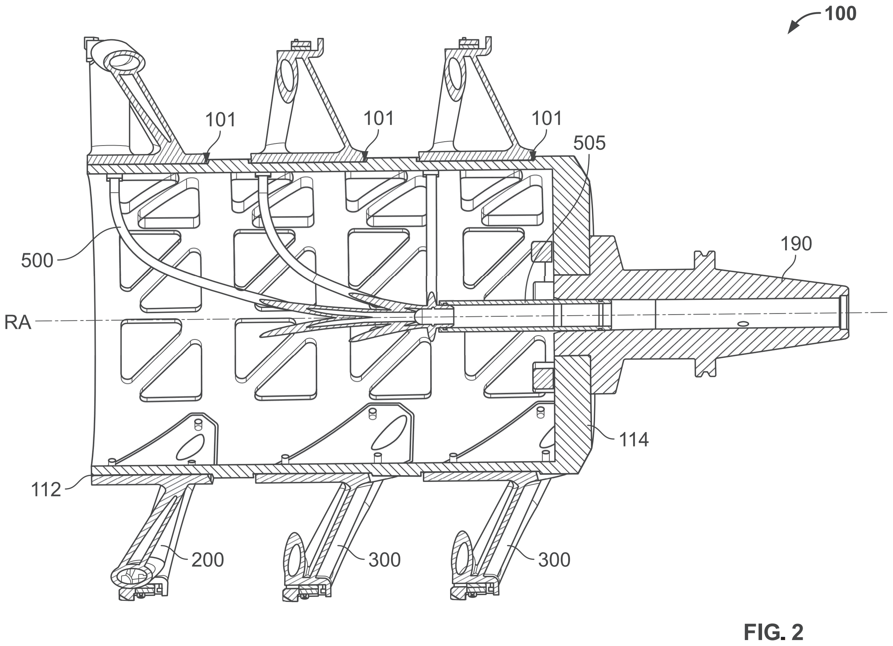

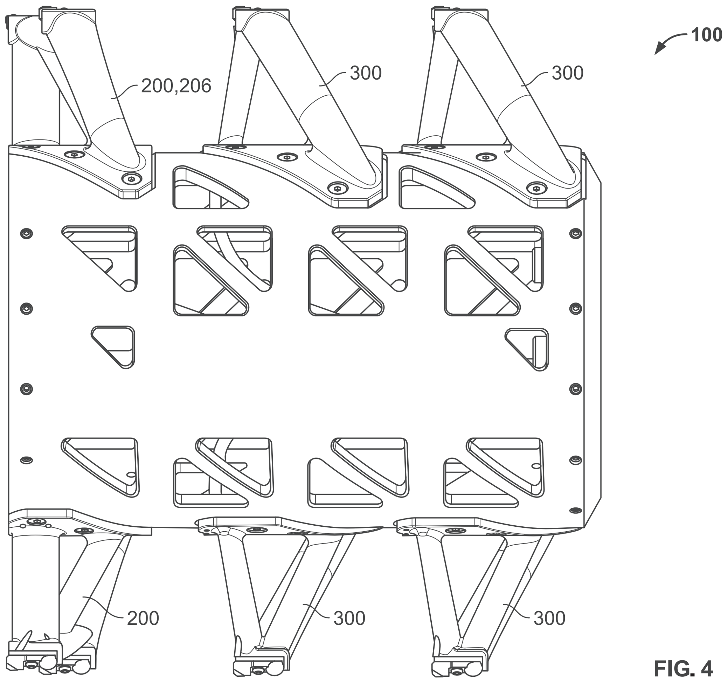

Referring generally to Figures 1-4, embodiments of the present disclosure include a rotary cutting tool 100. In general, the cutting tool 100 includes a tubular and generally hollow support body 110 having an open axially forward end 112 and a generally closed axially rearward end 114, relative to a rotation axis RA of the tool (see Figure 2). The tool 100 is adapted to be rotated in the direction R further illustrated in Figure 1.

The support body 110 may be a unitary or monolithic component. Specifically, in one embodiment, the body 110 is machined aluminum, ensuring desired stiffness and improved reliability during use. As shown, pocketing of the sidewall of the body 110 may be provided for further weight reduction. The rearward end 114 of the body 110 is adapted to attach to a mandrel or machine adapter 190 by way of the illustrated fasteners. The adapted 190 is configured to be attached to a rotating output of a machine for rotating the tool 100 about its rotation axis RA.

The tool 100 further includes a plurality of support arm assemblies, support arm elements, or cutting assemblies 200, 300. The support arm assemblies or elements 200, 300 are removably attached to an exterior of the body 110 and extend generally in a radially outward direction. Each support arm assembly 200, 300 includes a plurality of support arms. Specifically, embodiments of the present disclosure include support arm assemblies 200 of a first type, and cutting assemblies or support arm assemblies 300 of a second type. In the exemplary embodiment, two of the support arm assemblies 200 are located proximate the forward end 112 of the body 110, while four of the support arm assemblies 300 of the second type arrange toward the middle and rearward end 114 of the body 110.

Referring generally to Figures 1-7, each support arm assembly 200 includes a curved base or base plate 201, first, second and third support arms 202, 204, 206 extending from the base, and a pair of receiving pockets 210, 210' adapted to hold a cutting insert or cartridge. In one embodiment, the pockets 210, 210' are formed integrally with the support arms 202, 204, 206 on ends opposite the base 201. An interconnecting arm 208 spans between the receiving pockets 210, 210' in a direction generally parallel to an axial direction of the tool 100. In addition to adding strength, this arm 208 may also form part of the pockets 210, 210'.

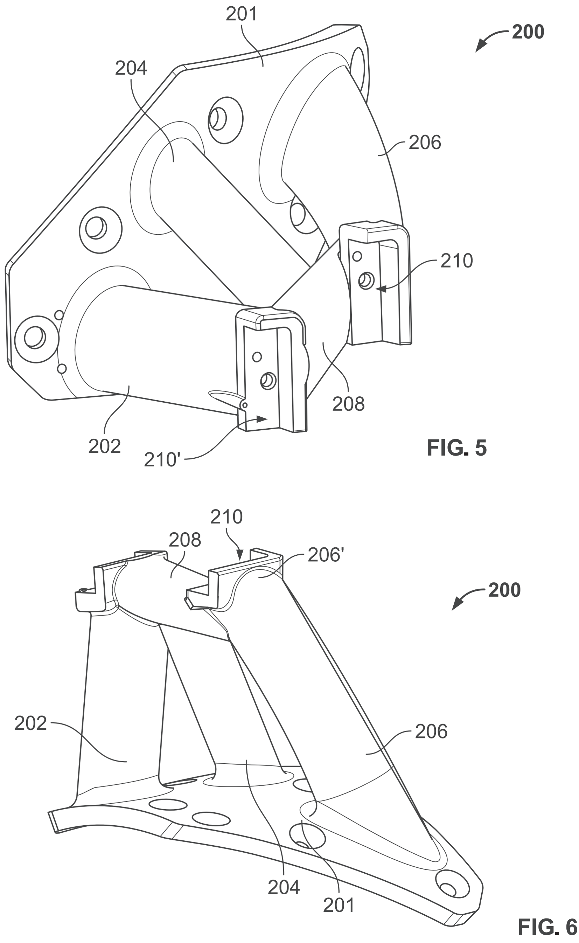

As shown, each of the support arms 202, 204, 206 have a varying elliptical cross section as they extend between the base 201 and the pockets 210, 210'. The orientation of the elliptical cross sections also alter (e.g., rotate) over the length of the arms in order to optimize their interface with the pockets 210, 210', or more specifically, to optimize their integration therewith, and improve their interface with the base 201. Specifically, the arms 202 and 204 extend generally along a linear path between the base 201 and the pockets 210, 210'. The arm 206 forms a rear support arm which sweeps or extends along a generally arcuate or elliptical path. As shown most clearly in Figures 5 and 6, the elliptical nature of the cross section of the arm 206 rotates approximately 90 degrees and its overall curvature is adapted such that its distal end 206' (see Figure 6) supports (or forms) the pocket 210 at least partially from a back side thereof. As can be visualized, this arrangement improves support of the pocket 210, and thus of a cutting insert arranged therein to counteract cutting forces acting thereon. It should be understood that the above-described forms of each of the arms 202, 204, 206 has been specifically designed not only to improve their performance in the particular intended applications of the tool 100, but also in view of their formation by additive processing. Thus, these features are more than mere design choice.

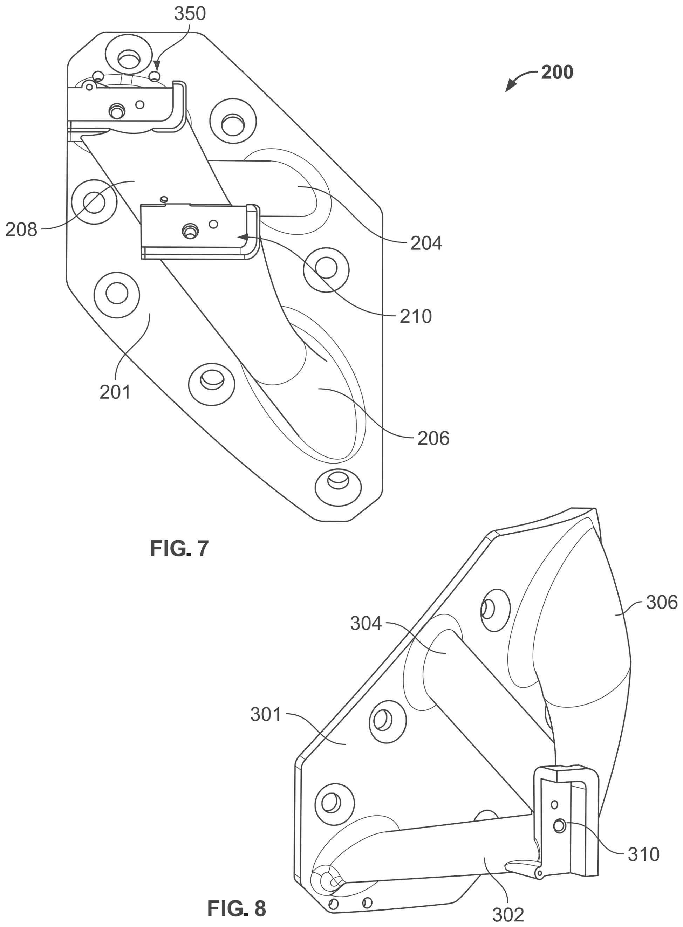

With particular reference to Figures 8-10, the second support arm assembly 300 includes features similar to those set forth above with respect to the support arm assembly 200. Specifically, while only defining and/or supporting one cutting insert pocket 310, it includes a similar curved base or base plate 301, and three support arms, 302, 304, 306 each having a changing elliptical cross section. As described above, the three support arms 302, 304, 306 including two generally linear front arms 302, 304 supporting or being formed integrally with, the pocket 310, as well as a rearward arm 306. The rearward arm 306 extends along a curved or elliptical path and supports the pocket 310 from a rearward side thereof. This arrangement optimally supports the insert arranged in the pocket 310 during further use. It should be understood that the rearward support arms 206, 306 may have an overall diameter greater than those of the associated two front support arms.

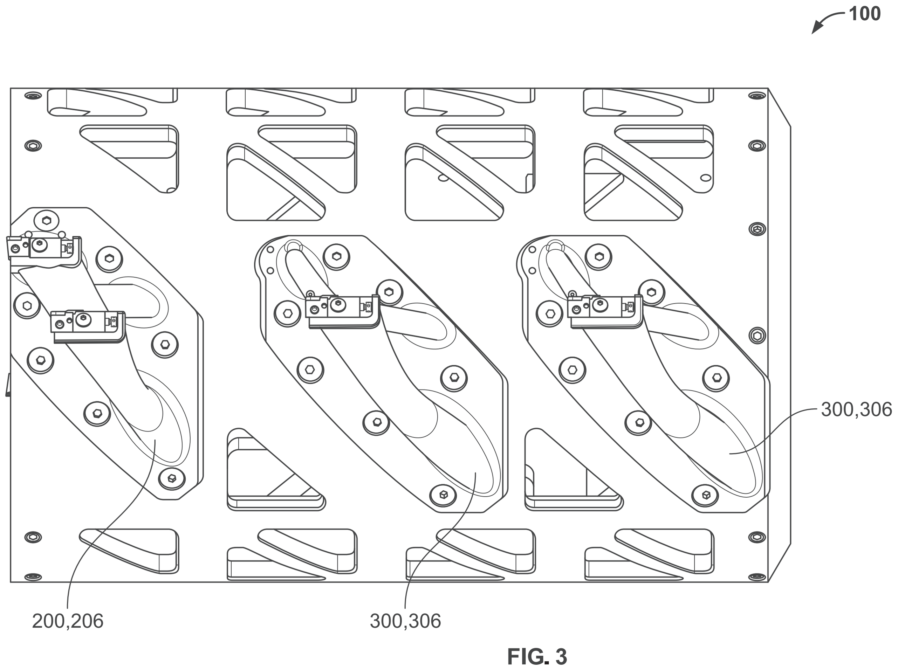

As further shown, particularly in Figure 3, the rearward support arms 206, 306 extend from the pocket in a direction opposite to the rotation direction of the tool 100, as well as in a direction toward the second end 114 of the tool. In this way, the pockets 210, 310 and cutting inserts therein are optimally supported during operation of the tool 100. As further shown in Figure 3, the pockets 210, 210' of the support arm assembly 200 are offset from one another in an axial direction and spaced from one another circumferentially. Likewise, the pockets 310 of the support arm assemblies 300 are aligned in an axial direction. The same alignment may be present on the opposite radial side of the main body 110.

As shown throughout the figures, a plurality of fasteners are used to secure the support arm assemblies 200, 300 to the main body 110. This may be achieved via the use of threaded holes formed through the body. Each aperture formed through the bases 201, 301 may include a chamfer 207 for more precisely locating the support arm assemblies 200, 300. In other embodiments, locating pins may be used to precisely locate each of the support arm assemblies relative to the main body 110

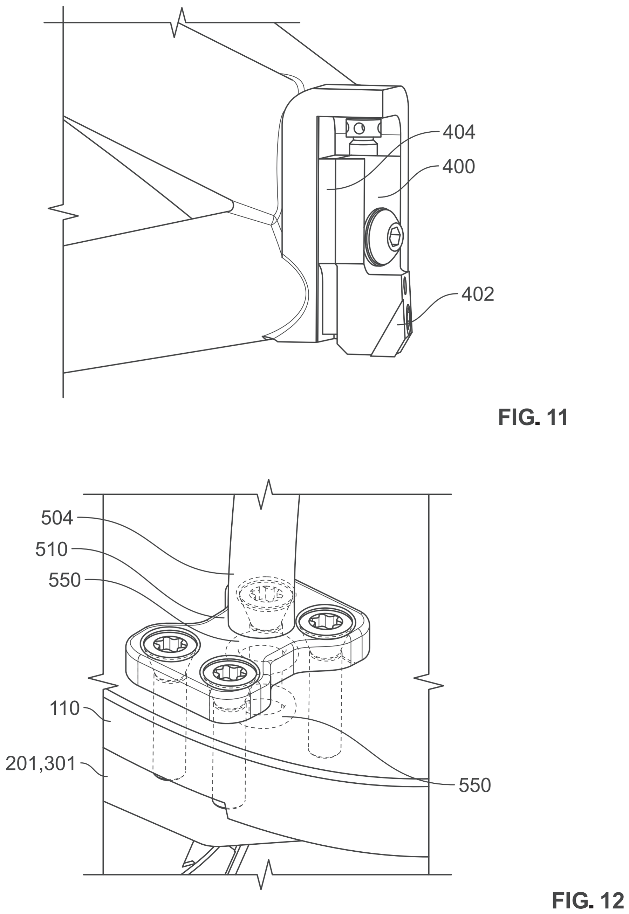

It should be understood that each pocket or pocket region 210, 310 is adapted to support a cutting member, such as an insert-receiving cartridge with a cutting insert mounted therein, a cutting insert mounted in an insert-receiving pocket, and the like. In the illustrated embodiment, as shown in Figure 11, for example, each pocket receives an insert-receiving cartridge 400 with a cutting insert 402 adjustably mounted therein. Alternatively, the cutting inserts 402 can be mounted directly to an insert-receiving pocket of a type known in the art. Further, in order to utilize the same tool for different operations (or applications), sizing plates or shims 404 may be installed between the pockets 210, 310 and the cartridges 400. In this way, by way of example, the tool 100 may be adapted to perform both semi finishing and finishing operations.

Referring again to Figure 2, the body 110 of the tool 100 includes recessed pockets or recesses 101 formed into the external wall of the cylindrical portion of the body 110. Each of the support arm assemblies 200, 300 are adapted to be fitted into in a respective one of the recesses 101. More particularly, each recess 101 defines an outer circumference generally complementary to a perimeter of each of the bases 201, 301. A floor of each pocket 101 is also curved, generally matching the radius of curvature of the body 110, and more specifically, the curvature of an underside of each of the bases 201, 301 of the support arm assemblies 200, 300. This arrangement serves to generally locate each of the support assemblies 200, 300 prior to fastening. It also permits for tolerance accommodation due to, for example, production variations in the main body 110 and/or the bases 201, 301.

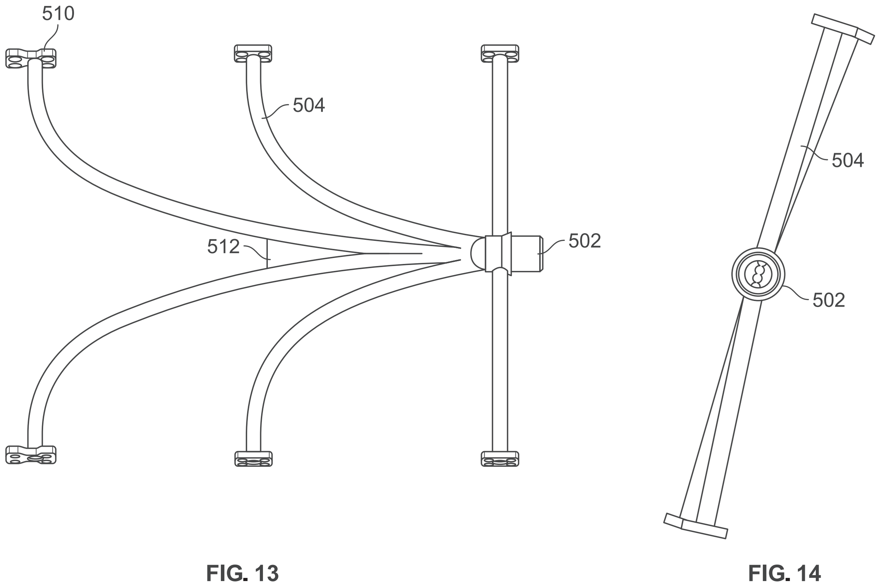

As described above, tool 100 further includes a coolant manifold 500. As shown in Figures 13 and 14, in the exemplary embodiment, the manifold 500 is a unitary 3D printed component (e.g., a 3D printed metal component) and includes a connecting end 502, and a plurality of legs 504 extending therefrom. The connecting end 502 and the legs 504 are hollow, with interiors thereof in fluid communication with one another. A mounting flange 510 is integrally formed on the distal end of each leg 504. A stiffening web 512 is formed between at least two of the legs 504, and provides additional strength and support for the manifold 500. The ability to additively manufacture the manifold 500 reduces costs, saves weight, and simplifies assembly over prior art designs. It is also easily replaceable in the event of failure or damage. As shown in Figure 14, the manifold 500 is three-dimensional in form, with the legs 504 extending radially-outward, and at multiple distinct angular orientations with respect to a central axis of the connecting end 502.

As shown in Figures 1 and 2, an intermediate tube or extension 505 is fitted into fluid communication with a hollow coolant passage formed through the arbor 190, and extends into an internal space defined by the body 110. The connecting end 502 of the manifold 500 may be fitted to the opposite end of this intermediate tube 505. Any of these connections may be threaded, and/or sealed via other arrangements (O-ring seals, etc.) In other embodiments, the connecting end 502 may be inserted directly into the arbor 190. Each leg 504 of the manifold 500 is aligned with at least one of the arms of each support arm assembly 200, 300, providing coolant therethrough and to the cutting cartridge 400 associated therewith. More specifically, in the exemplary embodiment, the manifold 500 is fluidly connected to the arm of each support arm assembly 200, 300 most proximal to the front end 112 of the body 110. This provides the most optimal coolant path through each support arm assembly 200, 300.

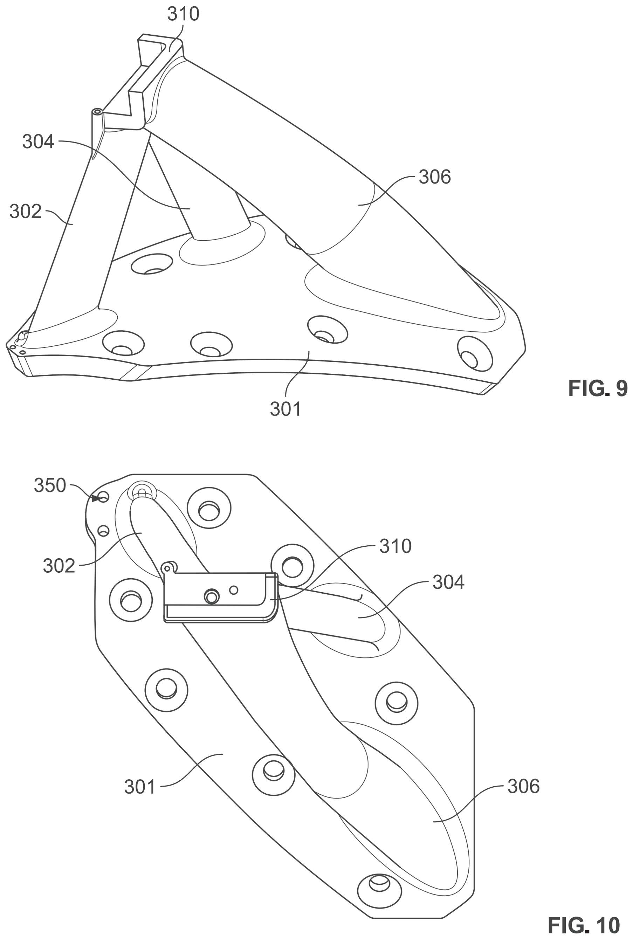

Figure 12 illustrates the mounting of the manifold 500 within the main body 110 of the tool 100. Specifically, a plurality of fasteners are passed through the flange 510 of the manifold 500, the body 110, and into each of the support arm assemblies 200, 300. In this way, the manifold 500 is directly fixed to its corresponding support arm assembly. In particular, apertures 350 shown, for example, in Figure 10, illustrate locations where free ends of the fasteners are threadably secured to the bases 201, 301. This arrangement provides added reliability compared to securing the flange 510 to the main body 110. Still referring to Figure 12, seals 550 may provided between each joint.

In addition, those areas in which it is believed that those of ordinary skill in the art are familiar, have not been described herein in order not to unnecessarily obscure the invention described. Accordingly, it has to be understood that the invention is not to be limited by the specific illustrative embodiments, but only by the scope of the appended claims.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of the elements or steps, unless such exclusion is explicitly stated. Furthermore, references to "one embodiment" of the present disclosure are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A rotary cutting tool (100), comprising:
a support body (110) adapted to be attached on a first end to an arbor (190) of a rotating machine;
a plurality of support arm assemblies (200), each including:
a base (201) removably attached to an exterior of the support body (110); and
a plurality of support arms (202) extending from the base (201), with at least one of the arms (202) defining a pocket (101) adapted to receive a cutting insert (402); and
a coolant manifold (500), including:
a central opening adapted to be removably connected to a supply of coolant; and
a plurality of supply legs (504) in communication with the central opening and operatively connected to one of the support arms (202) of each support arm assembly (200) for supplying coolant to each of the pockets (210).

2. The tool (100) according to claim 1, wherein each support arm assembly (200) is a monolithic component formed from additive manufacturing.

3. The tool (100) according to claim 2, wherein each support arm assembly (200) includes first, second and third support arms (202, 204, 206).

4. The tool (100) according to claim 3, wherein each of the first, second and third support arms (202, 204, 206) comprises a varying elliptical cross section along its length.

5. The tool (100) according to claim 4, wherein the first and second support arms (204) extend generally linearly between the pocket (101) and the base (201).

6. The tool (100) according to claim 3, wherein the third support arm (206) extents along an arcuate or helical path between the pocket (101) and the base (201).

7. The tool (100) according to claim 6, wherein the third support arm (206) directly supports a rear wall of the pocket (101), the rear wall extending generally radially outward from the support arm assembly (200) relative to a rotational axis of the tool (100).

8. The tool (100) according to claim 3, wherein an elliptical cross section of the third support arm (206) rotates approximately ninety degrees over its length.

9. The tool (100) according to claim 1, wherein the coolant manifold (500) comprises a monolithic component formed by additive manufacturing.

10. The tool (100) according to claim 1, wherein the plurality of supply legs (504) of the coolant manifold (500) are directed fastened to each of the plurality of support arm assemblies (200).

11. The tool (100) according to claim 10, wherein each of the plurality of supply legs (504) defines a flange (510) formed on a free end thereof, wherein a plurality of fasteners pass through the flange (510), through the support body (110), and engage with a respective one of the support arm assemblies (200).

12. The tool (100) according to claim 1, wherein the plurality of support arm assemblies (200) include at least one support arm assembly (200) of a first type defining two pockets (210) each adapted to hold a cutting insert (402).

13. The tool (100) according to claim 12, wherein the two pockets (210) are spaced from each other in a circumferential direction of the support body (110) and are staggered in an axial direction of the support body (110).

14. The tool (100) according to claim 12, wherein the plurality of support arm assemblies (200) include at least one support arm assembly (200) of a second type defining a single pocket (101) adapted to hold a cutting insert (402).

15. The tool (100) according to claim 1, further comprising a removable shim arranged on a radially outward facing surface of the pocket (101) and adapted to bias a cutting insert (402) arranged in the pocket (101) in a radially outward direction.

16. The tool (100) according to claim 1, wherein the support body (110) defines a plurality of recesses (101) formed into an exterior surface thereof, with each recess (101) receiving at least a portion of a respective one of the bases (201) of each of the plurality of support arm assemblies (200).

17. The tool (100) according to claim 16, wherein the base (201) of each support arm assembly (200) is curved complementary to the main body (110), and wherein a floor of each of the recesses (101) is corresponding curved to abuttingly contact an underside of each base (201).

18. A cutting tool (100), comprising:
a cylindrical support body (110);
a plurality of additively manufactured cutting supports each independently removably fastened to an exterior of the support body (110), each cutting support including:
a base (201) for attaching to the exterior of the support body (110); and
first, second and third support arms (202, 204, 206) extending from the base (201) and defining a pocket (101), each of the support arms (202):
includes an elliptical cross section that changes over a length of the arm (206);
extends from the pocket (101) to the base (201) in a direction distinct from that of the remainder of the arms (202); and
a cutting insert (402) arranged within the pocket (101); and
an additively manufactured coolant manifold (500) insertable into an open end of the support body (110), including:
a central opening adapted to be connected to a supply of coolant; and
a plurality of supply legs (504) in communication with the central opening and operatively connected to one of the support arms (202) of each cutting support for supplying coolant to each of the cutting inserts (402).

19. The tool (100) according to claim 18, wherein:
the first and second support arms (204) extend generally linearly between the pocket (101) and the base (201);
the third support arm (206) extents along an arcuate or helical path between the pocket (101) and the base (201); and
the third support arm (206) directly supports a rear wall of the pocket (101).

20. The tool (100) according to claim 18, wherein the plurality of cutting supports include:
a pair of cutting supports of a first type, each defining two staggered pockets (210) holding a respective cutting insert (402) and arranged generally on opposite radial sides of the support body (110); and
two pairs of cutting supports of a second type, each defining a single pocket (101) holding a respective cutting insert (402), one pair of the cutting supports of the second type aligned in an axial direction on one radial side of the support body (110), and the other pair of cutting supports of the second type aligned in an axial direction with one another and arranged on an opposite radial side of the support body (110) from the one pair of cutting supports of the second type.
